# EUROPÄISCHE PATENTSCHRIFT

(11) **EP 1 300 379 B1**
(45) Veröffentlichungstag und Bekanntmachung des Hinweises auf die Patenterteilung: **03.01.2007**
(21) Anmeldenummer: 02021360.9
(22) Anmeldetag: 24.09.2002
(51) Int. Cl.: C04B 35/83, C04B 38/00, C04B 41/88, C04B 35/573, F16D 69/02

(54) **Verfahren zur Herstellung von Hohlkörpern aus faserverstärkten keramischen Materialien**
Process of manufacturing fiber reinforced ceramic hollow bodies
Procédé pour fabriquer des objets creux en céramique renforcés de fibres

(30) Priorität: 02.10.2001 DE 10148658
(43) Veröffentlichungstag der Anmeldung: 09.04.2003
(73) Patentinhaber: AUDI AG, 85045 Ingolstadt (DE)
(72) Erfinder: Bauer, Moritz, 86153 Augsburg (DE); Heine, Michael, Dr., 86695 Allmannshofen (DE); Gruber, Udo, 86356 Neusäss (DE); Hüner, Ronald, Dr., 86674 Baar (DE); Kienzle, Andreas, Dr., 86672 Thierhaupten (DE); Rahn, Andreas, 86637 Wertingen (DE); Zimmermann-Chopin, Rainer, Dr., 86679 Ellgau (DE)
(74) Vertreter: Deckers, Hellmuth Alexander

(56) Entgegenhaltungen:
- EP-A- 1 008 569
- WO-A-96/13470
- WO-A-98/42635
- DE-A- 19 834 571
- US-A- 3 867 491
- US-A- 4 847 063

## Beschreibung

Die vorliegende Erfindung bezieht sich auf ein Verfahren zur Herstellung von Hohlkörpern aus faserverstärkten keramischen Materialien. Insbesondere betrifft die Erfindung ein Verfahren zur endkonturnahen Herstellung eines porösen faserverstärkten Kohlenstoff-haltigen Formkörpers mit Ausnehmungen oder Hohlräumen, insbesondere eines faserverstärkten C/C-Körpers (mit Kohlenstoffasern verstärkter Kohlenstoff, engl. "CFC" oder "CFRC", carbon fibre reinforced carbon), der aus binderhaltigen Faserstoffmassen mittels eines Preßvorganges unter Verwendung von Preßkernen geformt und in einer nachfolgenden thermischen Behandlung zu C/C umgesetzt wird, sowie gegebenenfalls die Nachverdichtung dieses porösen faserverstärkten Kohlenstoff-haltigen Formkörpers unter Ausbildung einer keramischen Matrix, insbesondere durch eine Flüssigmetall-Infiltration in den C/C-Körper, gegebenenfalls mit anschließender Wärmebehandlung, wobei die Matrix dann Metalle und die durch Reaktion mit dem Kohlenstoff gebildeten Metallcarbide sowie gegebenenfalls Reste von nicht umgesetztem Kohlenstoff enthält.

Das erfindungsgemäße Verfahren betrifft insbesondere die Herstellung von mit Kohlenstoffasern verstärkten keramischen Verbundwerkstoffen mit Ausnehmungen und Hohlräumen, welche über die Flüssigmetallinfiltration mit Siliciumschmelzen unter Reaktion zumindest eines Teils des Kohlenstoffs zu Siliciumcarbid in mit Kohlenstoffasern verstärkte Verbundwerkstoffe mit SiC-haltiger oder Kohlenstoff- und SiC-haltiger Matrix (C/SiC- oder C/C-SiC-Werkstoffe) umgesetzt werden. Anwendung finden diese Verbundwerkstoffe insbesondere bei Brems-, Kupplungs- und Reibscheiben, sowie als hochtemperaturbeständige Konstruktionswerkstoffe.

Heutzutage überwiegend verwendete Materialien für Bremsscheiben im Automobilbau sind Stahl oder Grauguß, und in der Luftfahrt mit Kohlenstoffasern verstärkte Kohlenstoff-Werkstoffe (C/C). Die von den Scheibenmaterialien geforderten Eigenschaften sind dabei hohe mechanische Stabilität, Temperaturbeständigkeit, Härte und Verschleißfestigkeit gegenüber dem Reibpartner in der Reibpaarung der Bremse. Die Einsatztemperatur bisher verwendeter Graugußbremsscheiben ist dabei durch den Schmelzpunkt des Materials limitiert. Die mechanische Versagenstemperatur liegt, abhängig von der Belastung, bereits deutlich unterhalb des Schmelzpunktes. Weiterhin tritt durch Umwandlung des metallischen Gefüges beim Erhitzen die Gefahr einer Rißbildung in den Scheiben auf. Die Verwendung von faserverstärkter Keramik als Werkstoff für Bremsscheibenanwendungen erweist sich als Lösung für diese Problematik. Insbesondere Werkstoffe auf der Basis von mit Kohlenstoffasern verstärktem Siliciumcarbid (C/SiC) haben sich für diese Anwendung als geeignet erwiesen. Die Vorteile dieses Materials sind die niedrigere Dichte (damit niedrigeres Gewicht bei gleichem Volumen), die hohe Härte und Temperaturbeständigkeit bis ca. 1400 °C und nicht zuletzt die extrem hohe Verschleißbeständigkeit. Das deutlich geringere Gewicht von Bremsscheiben aus diesen C/SiC-Werkstoffen erweist sich als positiver Einflußfaktor zur Verbesserung des Komforts und der Sicherheit durch die Reduktion der ungefederten Massen bei Kraftfahrzeugen und als wirtschaftlicher Faktor im Bereich der Luftfahrt. Die große Härte und Verschleißbeständigkeit von C/SiC-Bauteilen ermöglicht hier weit höhere Standzeiten im Vergleich zu bisher üblichen Materialien auf C/C-Basis oder Metallbasis.

Ein Verfahren zur Herstellung von C/SiC-Bauteilen ist beispielsweise aus der Schrift DE-A 197 10 105 bekannt und umfaßt unter anderem die folgenden Schritte :
- Herstellen einer preßfähigen Mischung aus Kohlenstoff-haltigen Fasern oder Faserbündeln, die mit einer Beschichtung überzogen sein können, einerseits und Füllmitteln und/oder Bindemitteln wie beispielsweise Harzen und/oder Pech andererseits,
- Formgebung der Mischung unter Druck und Temperatur und Carbonisierung der Kohlenstoff-haltigen Füll- und Bindemittel zur Herstellung eines Formkörpers, insbesondere eines aus mit Kohlenstoffasern verstärktem Kohlenstoff bestehenden Formkörpers (C/C) und gegebenenfalls Graphitierung
- Infiltrieren zumindest einer Randschicht des Formkörpers mit einer Silicium-Schmelze und zumindest partielle Reaktion mit dem Kohlenstoff im Formkörper zu SiC, wobei sich ein Formkörper bildet, der wenigstens in der Randschicht aus einer Verbundkeramik mit in einer Matrix aus überwiegend SiC, Si und C eingebetteten, Kohlenstoff-haltigen Fasern besteht (hier ebenfalls als C/SiC bezeichnet).

Im folgenden soll unter C/SiC allgemein auch die Werkstoffvariante verstanden werden, bei der wie oben beschrieben nur eine Randschicht siliciert wird.

Zu den üblichen Herstellungsverfahren gehören auch diejenigen, bei denen der C/C-Körper über die Flüssig- oder Gas-Phase mit Kohlenstoff-Vorläufern ("carbon precursors", Substanzen, die beim Erhitzen unter Ausschluß von oxydierenden Medien Kohlenstoff bilden) oder mit Kohlenstoff nachverdichtet wird, oder die Matrix aus überwiegend SiC, Si und C durch eine Gasphaseninfiltration (CVD, Chemical Vapour Deposition, oder CVI, Chemical Vapour Infiltration) oder durch die Pyrolyse von Si-haltigen präkeramischen Polymeren erzeugt wird.

Heutige metallische Bremsscheiben besitzen häufig von Luft durchströmte Lüftungsschlitze oder -kanäle innerhalb der Scheibe, um das Temperaturniveau der Scheibe zu reduzieren und den Verschleiß der Reibbeläge bei hoher Belastung zu senken. Derartige Lüftungskanäle werden auch bei Bremsscheiben auf C/SiC-Basis ausgebildet, besonders um das Temperaturniveau mit Rücksicht auf die Bremsbeläge und weitere Systemkomponenten zu senken.

Ein Verfahren zur Herstellung von Reibeinheiten aus C/C-SiC-Werkstoff mit Lüftungskanälen, Hohlräumen und Ausnehmungen, bei dem ein endkonturnah strukturierter poröser Kohlenstoffkörper mit flüssigem Silicium infiltriert wird, ist aus der EP-B 0 788 468 bekannt. Dieses Verfahren nutzt den Umstand, daß sich die Siliciumflüssiginfiltration und Ausbildung der Si- und SiC-reichen Verbundwerkstoff-Matrix nahezu ohne Geometrieänderung des C/C-Vorkörpers vollzieht, so daß die Hohlräume und Ausnehmungen bereits im relativ weichen und gut zu bearbeitenden C/C-Vorkörper angelegt werden können und nicht erst in der sehr harten C/C-SiC-Verbundkeramik. Unter anderem wird vorgeschlagen, die Hohlräume und Ausnehmungen durch lösliche Kerne aus Schaumpolystyrol wie ^{®}Styropor oder andere Hartschäume, durch pyrolysierbare Kerne aus Polyvinylalkohol, oder durch entnehmbare Kerne aus Gummi, Metall oder Keramik zu bilden.

Für die verwendete Druckformgebung mit thermischer Aushärtung der Preßmasse erweisen sich die dort als Matrixmaterial vorgeschlagenen Kunststoffe als zu weich und thermisch unbeständig. Die Behandlung mit Lösungsmittel zur Entfernung der Kerne birgt die Gefahr der Zerstörung des im allgemeinen noch sehr weichen Vorkörpers. Diese Gefahr besteht ebenso bei der Pyrolyse des vorgeschlagenen Kunststoffes Polyvinylalkohol, der beim Erhitzen innerhalb der Vorform gasförmige Zersetzungsprodukte bildet, die heftig austreten und den Formkörper sprengen können. Auch die üblichen Metalle und Keramiken sind für die thermischen Prozesse zur Härtung des druckgeformten Grünkörpers und dessen Carbonisierung zum C/C-Vorkörper aufgrund ihrer im allgemeinen unangepaßten thermophysikalischen Eigenschaften ungeeignet.

In der DE-C 198 24 571 wird ein weiteres Verfahren vorgeschlagen, Hohlräume in einem Werkstück aus C/SiC-Verbundkeramik zu bilden. Die Hohlräume entstehen bei der Vorformfertigung durch Druckformgebung unter Verwendung von Kernen aus Silicium, Siliciumlegierungen oder Si/BN-Mischungen. Dabei werden die Kerne bis zum Schritt der Flüssiginfiltration mit Silicium nicht aus der Vorform entfernt, sondern dienen vielmehr als Siliciumquelle für die Silicierung. Die Vorform muß vor dem Silicieren erhitzt und zu einem C/C-Vorkörper umgesetzt werden, wobei die organischen Bestandteile, wie zum Beispiel Binder, zersetzt werden und eine Schwindung der Vorform eintritt. Diese Schwindung führt zu einem Aufschrumpfen des Vorkörpers auf die siliciumhaltigen Kerne, welche ihrerseits durch die Erhitzung noch zusätzlich eine thermische Expansion erfahren. Im allgemeinen treten hier unerwünschte Spannungen oder gar Zerstörungen in der Vorform auf, die es zu vermeiden gilt.

Aufgabe der Erfindung ist es daher, ein Verfahren zu entwickeln, das zur endkonturnahen Druckformgebung der faserverstärkten Kohlenstoff-haltigen Vorkörper geeignet ist, wobei sich der Kern ohne Beeinträchtigung des ausgehärteten Vorkörpers schonend, einfach und rückstandsfrei entfernen läßt.

Diese Aufgabe wird erfindungsgemäß dadurch gelöst, daß Kerne aus Materialien verwendet werden, die oberhalb der Härtungstemperatur bei der Druckformgebung unzersetzt schmelzen und im weiteren thermischen Prozeß gegebenenfalls rückstandsfrei pyrolysiert werden. Die vom Kern befreiten Vorkörper können dann gegebenenfalls der Infiltration mit geschmolzenem Metall, insbesondere Silicierung, zur fertigen Verbundkeramik zugeführt werden.
Im Rahmen dieser Anmeldung wird Silicium ebenfalls als Metall betrachtet.
Die Erfindung betrifft daher ein Verfahren zur Herstellung von Hohlkörpern aus faserverstärkten keramischen Materialien, wobei
- im ersten Schritt Kerne hergestellt werden, deren Form der von Hohlräumen in den Hohlkörpern entspricht,
- im zweiten Schritt ein Grünkörper hergestellt wird, indem in eine Preßform die Kerne und eine preßfähige Masse so gefüllt werden, daß die Position der Kerne der Position der zu bildenden Hohlräume entspricht, wobei die preßfähige Masse Kohlenstoffasern und/oder Kohlenstoffäden und Pech und/oder Harze enthält, welche bei Wärmebehandlung unter Ausschluß von Oxydationsmitteln Kohlenstoff-haltige Rückstände bilden,
- im dritten Schritt der Grünkörper durch Erwärmen auf eine Temperatur von 120 °C bis 280 °C unter Druck verfestigt wird,
- im vierten Schritt der verfestigte Grünkörper durch Erhitzen unter Ausschluß von Luft und anderen Oxydationsmitteln auf eine Temperatur von ca. 750 °C bis ca. 1100 °C zu einem C/C-Körper carbonisiert wird, und gegebenenfalls
- im fünften Schritt der C/C-Körper unter Erhalt seiner Form mit flüssigem Metall infiltriert wird, wobei zumindest teilweise eine Reaktion des Kohlenstoff-Anteils der Matrix des C/C-Körpers mit dem Metall unter Bildung von Carbiden abläuft,
dadurch gekennzeichnet, daß die Kerne aus einem Material bestehen, das im vierten Schritt unzersetzt schmilzt bei einer Temperatur von bis zu 100 °C über der Temperatur der Verfestigung des Grünkörpers, und zumindest teilweise aus den Hohlräumen des Grünkörpers herausläuft.

Bevorzugt ist der lineare thermische Ausdehnungskoeffizient des für die Kerne verwendeten Materials bis zu dessen Zersetzungstemperatur höchstens 1 · 10⁻⁵ K⁻¹.

"Zum überwiegenden Teil" bedeutet hier mindestens 50 % der Masse.

Bevorzugt werden solche Materialien eingesetzt, deren Schmelztemperatur höchstens 50 °C und insbesondere höchstens 30 °C über der Temperatur der Verfestigung des Grünkörpers liegt.

In einer weiteren bevorzugten Ausführungsform werden solche unzersetzt schmelzbaren Materialien für die Kerne eingesetzt, die bei einer Temperatur oberhalb ihrer Schmelztemperatur, bevorzugt mindestens 10 °C, insbesondere mindestens 50 °C oberhalb ihrer Schmelztemperatur, im wesentlichen rückstandsfrei (die verbleibende Masse ist höchstens 10 % der Ausgangsmasse) pyrolysiert werden.

Werden als Material für die Kerne thermoplastische Kunststoffe eingesetzt, so erfolgt die Herstellung der Kerne bevorzugt über ein Spritzgußverfahren. Allgemein eignen sich die bekannten Formungsverfahren, wie Kalt- oder Heiß-Pressen, Guß, Druckguß oder spanende Bearbeitung, je nach eingesetztem Material.

Das erfindungsgemäße Verfahren sieht vor, daß im zweiten Schritt preßfähige Massen aus Kohlenstoffasern, thermisch aushärtbaren Bindern, und -insbesondere Kohlenstoff-haltigen-Zuschlagstoffen zu Grünkörpern mit Hohlräumen und/oder Aussparungen verpreßt werden.

Bevorzugt werden die Kohlenstoffaserschichten des C/C-Vorkörpers in der Nähe des Kerns in vorgegebener Vorzugsrichtung der Kohlenstoff-Verstärkungsfasern auf den Kern aufgebaut. Hierfür werden bevorzugt solche preßfähigen Massen verwendet, die Kohlenstoffasern mit einer mittleren Länge von mindestens 5 mm enthalten. Bevorzugt wird dann die preßfähige Masse des zweiten Schrittes so in die Form gefüllt, daß die Kohlenstoffasern überwiegend parallel zur Richtung der höchsten Zugbeanspruchung des resultierenden Formteils orientiert sind. Überwiegend bedeutet in diesem Zusammenhang mindestens 50 %. Es ist auch möglich, die Kerne mit parallel gelegten und gebunden Kohlenstoffäden (englisch "tapes" oder "UDT" = unidirectional tapes genannt) zu umwickeln, und diese Hülle gegebenenfalls mit thermisch aushärtbaren Bindern zu fixieren. Auf diese Schicht vorzugsorientierter Kohlenstoffasern oder -fäden werden dann üblicherweise weitere preßfähige Massen mit geringerer Faser-, oder Faserbündellänge geschichtet.

In einer anderen bevorzugten Ausführungsform werden Kohlenstoffasern in Form von beschichteten Kurzfaserbündeln eingesetzt. Besonders bevorzugt sind hierbei mit graphitiertem Kohlenstoff beschichtete Fasern, beziehungsweise Faserbündel mit mittleren Längen unterhalb von 5 mm.

Als thermisch aushärtbare Binder werden Peche wie Kohlenteerpech oder Erdölpech und/oder bevorzugt härtbare Harze wie Phenolharze, Epoxidharze, Polyimide, füllstoffhaltige Mischungen mit Furfurylalkohol oder Furanharze eingesetzt. Die Massen werden hierzu in eine Preßform eingefüllt, wobei in der Form verlorene Kerne vorgesehen werden. Die Kerne nehmen den Raum der später in der Verbundkeramik zu bildenden Hohlräume oder Aussparungen ein. Nach dem Befüllen der Preßform wird die Masse gepreßt und unter Temperatureinwirkung ausgehärtet.

Gemäß einer Ausführungsform der Erfindung werden die Kerne aus schmelzbaren Materialien hergestellt, die aus thermoplastischen und rückstandsfrei pyrolysierbaren Polymeren (Kunststoffen) ausgewählt sind, im weiteren auch Thermoplastkerne genannt. Erfindungsgemäß wird das thermoplastische Material für den Kern so gewählt, daß dessen Schmelzpunkt oberhalb der Härtungstemperatur des Formgebungsverfahrens für den Grünkörper, typischerweise im Bereich von 120 bis 300 °C, aber deutlich unterhalb der Carbonisierungstemperatur der gepreßten und ausgehärteten Grünkörper liegt. Üblicherweise liegt der Schmelzpunkt bei mindestens 150 °C, bevorzugt bei mindestens 180 °C und besonders bevorzugt zwischen 220 °C und 280 °C. Werden als Binder für die preßfähigen Mischungen Phenolharze gewählt, so liegt der Schmelzpunkt des Thermoplasten beispielsweise bevorzugt über 150 °C. Für die bevorzugte Preßformgebung und Heiß-Härtung der Binder werden an den Thermoplastkern hohe Anforderungen an die Wärmeformbeständigkeit gestellt. Die Wärmeformbeständigkeitstemperatur (ISO 75A) liegt üblicherweise oberhalb von 80 °C, besonders bevorzugt bei mindestens 150 °C. Die Härte (Kugeldruckhärte) sollte mindestens 30 MPa betragen.

Besonders geeignet sind hierbei Polyamide (PA) wie PA 66, Polyimide (PI) wie Polyätherimid (^{®}Ultem, General Electric) oder modifiziertes Polymethacrylimid (PMI, z. B. ^{®}Kamax, Rohm & Haas), Polyoxymethylen (POM) und Polyterephthalate (PETP), sowie deren Copolymere. Nach der Preßformgebung wird der Grünkörper mitsamt dem Thermoplastkern in den C/C-Zustand überführt, das heißt carbonisiert. Dies geschieht im allgemeinen durch Erhitzen unter Schutzgas (Stickstoff) oder im Vakuum auf Temperaturen im Bereich von ca. 750 °C bis 1100 °C. Wird auf Temperaturen oberhalb von ca. 1800 °C erhitzt, findet zusätzlich eine Graphitierung des Kohlenstoffs statt. Dabei ist es wesentlich, daß der Thermoplastkern aufschmilzt und zumindest teilweise aus den Hohlräumen des Grünkörpers ausläuft, ohne sich zu gasförmigen Produkten zu zersetzen. Um den Grünkörper beim Erhitzen bis zum Schmelzpunkt des Thermoplastkerns nicht unter Spannungen zu setzen, liegt der thermische Ausdehnungskoeffizient des Kerns bevorzugt bei höchstens 1 · 10⁻⁵ K⁻¹.

Der Thermoplast kann nach dem Ausschmelzen aufgefangen und gegebenenfalls wiederverwendet werden. Besonders bevorzugt wird der Thermoplast aber während des Carbonisierungsschritts pyrolysiert, insbesondere auch deshalb, weil der poröse Grünkörper Reste der Schmelze in den Poren zurückhalten kann. Die Pyrolyse findet dann bei höheren Temperaturen im wesentlichen erst außerhalb des Grünkörpers statt. Hierdurch wird ein Sprengen des Grünkörpers vermieden. Die Pyrolyse, d.h. die Zersetzung zu gasförmigen Produkten, erfolgt üblicherweise oberhalb von 250 °C, bevorzugt mindestens 10 °C oberhalb des Schmelzpunktes des thermoplastischen Materials. Es ist zweckmäßig, Thermoplaste zu verwenden, die sich nahezu vollständig pyrolysieren lassen, obwohl geringe Kohlenstoffreste nicht störend sind, da sie ja in die später zu bildende Keramikmatrix aufgenommen werden. Für geeignete Polymere liegt der Pyrolyserückstand bei 900 °C bei höchstens 10 %, besonders bevorzugt maximal 8 % und besonders bevorzugt maximal 1 %. Gut geeignet sind hierbei Polymere auf der Basis von PA, PMI, POM und PETP. Bevorzugt sind Polyamid 66, Polyoxymethylen, Polyäthylenterephthalat und Polymethacrylimid (PMI), sowie deren Derivate, Copolymere und Mischungen (Blends). Als Komponente von Polymerblends können insbesondere auch weniger temperaturbeständige Polymere eingesetzt werden.

In einer weiteren Ausgestaltung der Erfindung werden solche Thermoplastkerne verwendet, die zur Verbesserung ihrer Festigkeit und Formbeständigkeit aus Füllstoff-haltigen thermoplastischen Materialien gefertigt werden. Die Füllstoffe liegen als Pulver, Fasern, Mikrokugeln oder Whisker vor und sind ausgewählt aus Glas, mineralischen Füllstoffen wie Kreide, Wollastonit, keramischen Materialien und Metallen. Bevorzugt werden Füllstoffe verwendet, die bis zur Carbonisierung sich weder zersetzen noch schmelzen. Als Pyrolyserückstand nach der Carbonisierung werden die Füllstoffe zurückerhalten, die sich dann entfernen und gegebenenfalls wiederverwenden lassen. Bevorzugt werden faserförmige Füllstoffe wie Glas-, Mineral- oder Kohlenstoffasern eingesetzt. Der Massenanteil an Füllstoffen in dem gefüllten Thermoplast liegt je nach Kernfertigungsverfahren bei mindestens 15 %, bevorzugt bei mindestens 30 %. Es ist auch möglich, organische nicht pyrolysierbare Stoffe als Füllstoffe zu verwenden, insbesondere carbonisierbare Harze wie die oben erwähnten Binder sind geeignet.

Ebenso ist es möglich, füllstoffhaltige thermoplastische Materialien einzusetzen, deren Füllstoffe als Pyrolysebeschleuniger wirkende Oxidationsmittel enthalten. Um die Entfernung einer eventuell verbleibende Restmenge des Thermoplastkerns aus dem Grünkörper zu vereinfachen, hat sich diese Beimischung von Oxidationsmitteln als sehr geeignet erwiesen.

Diese Oxidationsmittel tragen zur gezielten oxidativen Zersetzung des Thermoplastkerns bei. Besonders bevorzugt sind Beimischungen von Ammoniumnitrat, beispielsweise in einem Massenanteil von mindestens 10 %.

Die Menge der freigesetzten Pyrolysegase bei der Zersetzung des Kerns läßt sich verringern, und gleichzeitig läßt sich der Carbonisierungsschritt der Grünkörper technologisch vereinfachen, wenn in einer weiteren vorteilhaften Ausgestaltung der Erfindung geschäumte Thermoplaste als Kernmaterial eingesetzt werden. Hier kann beispielsweise geschäumtes Polyimid, wie Polymethacrylimid verwendet werden.

In einer weiteren Ausführungsform der Erfindung werden Kerne aus niedrigschmelzende Metallen verwendet. Prozeß und Anforderungen an die Materialien sind mit denen im Fall der Thermoplastkerne bis zum Schritt des Ausschmelzens nahezu identisch. Gegenüber den Thermoplasten liegt der Vorteil der Metalle in ihrer wesentlich höheren Festigkeit, im Gegensatz zur den Thermoplastkernen ergibt sich die Möglichkeit zur Pyrolyse aber nicht. Daher ist es zweckmäßig, die geschmolzenen Metalle aufzufangen und wiederzuverwenden. Besonders geeignet sind niedrigschmelzende Metallegierungen mit Schmelzpunkten unterhalb von 300 °C. Üblicherweise werden Legierungen auf Basis der Metalle Al, Zn, Cu, Bi, Pb, Sn, Fe, Sb und Si verwendet. Im Falle der Metallegierungen haben sich Wismut und Wismutlegierungen als sehr gut geeignet erwiesen, da sie bei niedriger Temperatur schmelzen und einen negativen thermischen Ausdehnungkoeffizienten besitzen. Dies vermeidet das Sprengen des Grünkörpers bei Erwärmung. Die ausgeschmolzenen Metalle können nach dem Ausschmelzen wieder in den Produktionsprozeß zurückgeführt werden. Neben diesem wirtschaftlichen und ökologischen Vorteil ist der größte Vorteil der Verwendung eines metallischen Kerns seine sehr leichte Herstellbarkeit in einer Gießform. Besonders bevorzugt sind Bi-und Sn-Legierungen, sowie Zn/Mg/Al/Cu-Legierungen.

Nach der Carbonisierung des Grünkörpers werden gegebenenfalls angefallene Pyrolyse-, beziehungsweise Kohlenstoffreste in den gebildeten Hohlräumen beseitigt und es wird ein poröser C/C-Körper mit Hohlräumen oder Ausnehmungen erhalten, der sich weiterverwerten läßt. Er kann nachbearbeitet oder wiederum zu komplexeren Strukturen zusammengesetzt oder geklebt werden.

Im einem fünften Schritt wird der poröse C/C-Körper gegebenenfalls nachverdichtet, um zu einem besser gebrauchsfähigen Werkstück zu gelangen.

In einer bevorzugten Ausführungsform des erfindungsgemäßen Verfahrens wird der Kohlenstoff des C/C-Körpers durch eine Schmelzinfiltration mit Metallen und die gegebenenfalls anschließende Wärmebehandlung zumindest teilweise zu den entsprechenden Carbiden umgesetzt. Bevorzugt ist die Schmelzinfiltration mit Silicium, wobei sich zumindest ein Teil des Kohlenstoffs (bevorzugt der Kohlenstoff in der Matrix) zu Siliciumcarbid umsetzt; die Matrix enthält dann SiC, nicht umgesetzten Kohlenstoff sowie nicht umgesetztes Silicium. Hierzu wird der C/C-Körper mit Siliciumpulver überschichtet und auf Temperaturen von ca. 1500 bis ca. 1800 °C im Vakuum erhitzt. Je nach beabsichtigter Verwendung ist es dabei nicht zwingend notwendig, den gesamten C/C-Körper in C/SiC umzusetzen, im allgemeinen wird aber zumindest die Randschicht zu C/SiC umgesetzt. Obwohl die Siliciumschmelzinfiltration das bevorzugte Verfahren ist, kann der C/C-Körper auch mit anderen üblichen Verfahren unter Ausbildung der in der Verbundwerkstofftechnologie gängigen Matrices nachverdichtet werden. Insbesondere kann das Flüssigsilicierverfahren auch mit Siliciumlegierungen durchgeführt werden, die unter anderem Metalle wie Cr, Fe, Co, Ni, Ti und/oder Mo enthalten können.

Das beschriebene Verfahren kann bevorzugt zur Herstellung von Bremsscheiben oder Kupplungsscheiben verwendet werden. Hierbei werden in eine zylindrische Form die preßfähige Masse sowie die Kerne gefüllt, wobei als unterste und oberste Lage bevorzugt durchgehende Schichten der preßfähigen Masse gefüllt werden. Die Dicke der Boden- und Deckschicht beträgt nach dem Verpressen vorzugsweise mindestens 7 mm. Diese Schichten bilden die Reibschicht der Brems- oder Kupplungsscheibe. Der Formkörper, der die Brems- oder Kupplungsscheibe bildet, hat üblicherweise die Gestalt einer Ringscheibe, d. i. der achsennahe Raum ist durchgehend über die gesamte Dicke der Scheibe leer. Die Kerne werden bevorzugt rotationssymmetrisch um die Achse des Zylinders angeordnet, wobei bevorzugt mindestens 2 und höchstens 16 Kerne eingesetzt werden. Die Form der Kerne ist bevorzugt derart, daß die gebildeten Hohlräume von der Peripherie des zylindrischen Formkörpers bis zum inneren Rand des Formkörpers reichen und damit einen offenen Durchgang zwischen dem inneren und äußeren zylindrischen Rand der Ringscheibe bilden.

## Patentansprüche

1. Verfahren zur Herstellung von Hohlkörpern aus faserverstärkten keramischen Materialien, wobei
- im ersten Schritt Kerne hergestellt werden, deren Form der der Hohlräume entspricht,
- im zweiten Schritt ein Grünkörper hergestellt wird, indem in eine Form die genannten Kerne und eine preßfähige Masse gefüllt und verpreßt werden, wobei die preßfähige Masse Kohlenstoffasern und/oder Kohlenstoffäden und Pech und/oder Harze enthält, welche bei Wärmebehandlung unter Ausschluß von Oxydationsmitteln Kohlenstoff-haltige Rückstände bilden, derart daß die Lage der Kerne der gewünschten Lage der zu bildenden Hohlräume entspricht,
- im dritten Schritt der Grünkörper durch Erwärmen auf eine Temperatur von 120 °C bis 280 °C unter einem Druck verfestigt wird,
- im vierten Schritt der auch als Vorkörper bezeichnete verfestigte Grünkörper durch Erhitzen in einer nicht oxydierenden Atmosphäre auf eine Temperatur von ca. 750 °C bis ca. 1100 °C zu einem C/C-Körper carbonisiert wird,
**dadurch gekennzeichnet, daß** die Kerne aus einem Material bestehen, das im vierten Schritt unzersetzt schmilzt bei einer Temperatur von bis zu 100 °C über der Temperatur der Verfestigung des Grünkörpers, und zumindest teilweise aus den Hohlräumen des Grünkörpers herausläuft.

2. Verfahren nach Anspruch 1, **dadurch gekennzeichnet, daß** anschließend an den vierten Schritt
- im fünften Schritt der C/C-Körper unter Erhalt seiner Form mit flüssigem Metall infiltriert wird, wobei zumindest teilweise eine Reaktion des Kohlenstoff-Anteils der Matrix des C/C-Körpers mit dem Metall unter Bildung von Carbiden abläuft.

3. Verfahren nach Anspruch 1, **dadurch gekennzeichnet, daß** solche schmelzbaren Materialien für die Kerne eingesetzt werden, die bei einer Temperatur oberhalb ihrer Schmelztemperatur im wesentlichen rückstandsfrei pyrolysiert werden.

4. Verfahren nach Anspruch 3, **dadurch gekennzeichnet, daß** der Pyrolyserückstand des schmelzbaren Materials für den Kern höchstens 10 % beträgt.

5. Verfahren nach einem oder mehreren der vorhergehenden Ansprüche, **dadurch gekennzeichnet, daß** die preßfähige Masse des zweiten Schrittes als Verstärkungsmittel Kohlenstoffasern mit einer mittleren Länge von mindestens 5 mm enthält.

6. Verfahren nach Anspruch 1, **dadurch gekennzeichnet, daß** die preßfähige Masse des zweiten Schrittes so in die Form gefüllt wird, daß die Kohlenstoffasern überwiegend parallel zur Richtung der höchsten Zugbeanspruchung des resultierenden Formteils orientiert sind.

7. Verfahren nach einem der Ansprüche 1 bis 5, **dadurch gekennzeichnet, daß** die preßfähige Masse des zweiten Schrittes als Verstärkungsmittel Kohlenstoffasern in Form von beschichteten Kurzfaserbündeln enthält.

8. Verfahren nach einem oder mehreren der vorhergehenden Ansprüche, **dadurch gekennzeichnet, daß** das Material der preßfähigen Massen Peche ausgewählt aus Kohlenteerpech oder Erdölpech und/oder härtbare Harze ausgewählt aus Phenolharzen, Epoxidharzen, Polyimiden, füllstoffhaltigen Mischungen mit Furfurylalkohol und Furanharzen enthält.

9. Verfahren nach einem oder mehreren der vorhergehenden Ansprüche, **dadurch gekennzeichnet, daß** das Material der Kerne einen linearen thermischen Ausdehnungskoeffizient bis zu seiner Zersetzungstemperatur von höchstens 1·10⁻⁵ K⁻¹ aufweist.

10. Verfahren nach einem oder mehreren der vorhergehenden Ansprüche 1 bis 9, **dadurch gekennzeichnet, daß** das Material für den Kern ein thermoplastisches Polymer mit einer Wärmeformbeständigkeitstemperatur nach ISO 75A von mindestens 80 °C und einer Kugeldruckhärte von mindestens 30 MPa ist.

11. Verfahren nach einem oder mehreren der vorhergehenden Ansprüche, **dadurch gekennzeichnet, daß** das Material für den Kern ein Füllstoff-haltiges thermoplastisches Polymer ist, wobei der Massenanteil des Füllstoffs in dem Füllstoff-haltigen thermoplastischen Polymeren mindestens 15 % beträgt.

12. Verfahren nach Anspruch 11, **dadurch gekennzeichnet, daß** die Füllstoffe ausgewählt sind aus Kreide, Glaskugeln, Mikroglaskugeln, Wollastonit, Glasfasern, Kohlenstoffasern, und keramischen Fasern.

13. Verfahren nach einem oder mehreren der vorhergehenden Ansprüche, **dadurch gekennzeichnet, daß** als Material für den Kern ein füllstoffhaltiges thermoplastisches Polymer eingesetzt wird, dessen Füllstoffe als Pyrolysebeschleuniger wirkende Oxidationsmittel enthalten.

14. Verfahren nach einem oder mehreren der vorhergehenden Ansprüche, **dadurch gekennzeichnet, daß** als Material für den Kern ein geschäumter Thermoplast eingesetzt wird.

15. Verfahren nach einem oder mehreren der Ansprüche 1, 2 und 5 bis 9, **dadurch gekennzeichnet, daß** als Material für den Kern niedrigschmelzende Metalle verwendet werden.

16. Verfahren nach Anspruch 15, **dadurch gekennzeichnet, daß** niedrigschmelzende Metallegierungen mit Schmelzpunkten unterhalb 300 °C verwendet werden.

17. Verfahren nach Anspruch 15, **dadurch gekennzeichnet, daß** Legierungen auf der Basis der Metalle Al, Zn, Cu, Bi, Pb, Sn, Fe, Sb und Si verwendet werden.

18. Verfahren nach Anspruch 15, **dadurch gekennzeichnet, daß** die Metalle ausgewählt sind aus Wismut und Wismutlegierungen, Zinn-Legierungen sowie Zn/Mg/Al/Cu-Legierungen.

## Claims

1. A process for producing hollow bodies comprising fiber-reinforced ceramic materials, where
- cores whose shape corresponds to that of the hollow spaces are produced in a first step,
- a green body is produced in a second step by introducing the abovementioned cores and a pressable composition into a mold and pressing, where the pressable composition comprises carbon fibers and/or carbon threads and pitch and/or resins which form carbon-containing residues on heat treatment in the absence of oxidants, in such a way that the position of the cores corresponds to the desired position of the hollow spaces to be formed,
- the green body is strengthened by heating to a temperature of from 120°C to 280°C under pressure in a third step,
- the strengthened green body, also referred to as intermediate body, is carbonized in a fourth step by heating in a nonoxidizing atmosphere to a temperature of from about 750°C to about 1100°C to give a C/C body,
wherein the cores comprise a material which in the fourth step melts without decomposition at a temperature of up to 100°C above the temperature of the strengthening of the green body and runs at least in part out of the hollow spaces of the green body.

2. The process as claimed in claim 1, wherein, subsequent to the fourth step,
- the C/C body is infiltrated with liquid metal with retention of its shape in a fifth step, with at least partial reaction of the carbon present in the matrix of the C/C body with the metal to form carbides occurring.

3. The process as claimed in claim 1, wherein the meltable materials used for the cores are ones which are pyrolyzed essentially without leaving a residue at a temperature above their melting point.

4. The process as claimed in claim 3, wherein the residue remaining after pyrolysis of the meltable material for the core is not more than 10%.

5. The process as claimed in one or more of the preceding claims, wherein the pressable composition of the second step comprises carbon fibers having a mean length of at least 5 mm as reinforcing material.

6. The process as claimed in claim 1, wherein the pressable composition of the second step is introduced into the mold in such a way that the carbon fibers are predominantly oriented parallel to the direction of the highest tensile stress in the resulting shaped part.

7. The process as claimed in any one of claims 1 to 5, wherein the pressable composition of the second step comprises carbon fibers in the form of coated short fiber bundles as reinforcing material.

8. The process as claimed in one or more of the preceding claims, wherein the material of the pressable compositions comprises pitches selected from among coaltar pitch and petroleum pitch and/or curable resins selected from among phenolic resins, epoxy resins, polyimides, filler-containing mixtures with furfuryl alcohol and furan resins.

9. The process as claimed in one or more of the preceding claims 1 to 9 , wherein the material of the cores has a linear coefficient of thermal expansion up to its decomposition temperature of not more than 1 x 10⁻⁵ K⁻¹.

10. The process as claimed in one or more of the preceding claims, wherein the material for the core is a thermoplastic polymer having a heat distortion temperature (ISO 75A) of at least 80°C and a Brinell hardness of at least 30 MPa.

11. The process as claimed in one or more of the preceding claims, wherein the material for the core is a filler-containing thermoplastic polymer in which the proportion by mass of filler is at least 15%.

12. The process as claimed in claim 11, wherein the fillers are selected from among chalk, glass spheres, glass microspheres, wollastonite, glass fibers, carbon fibers and ceramic fibers.

13. The process as claimed in one or more of the preceding claims, wherein the material used for the core is a filler-containing thermoplastic polymer whose fillers comprise oxidants acting as pyrolysis accelerators.

14. The process as claimed in one or more of the preceding claims, wherein the material used for the core is a foamed thermoplastic.

15. The process as claimed in one or more of claims 1, 2 and 5 to 9, wherein the material used for the core is a low-melting metal.

16. The process as claimed in claim 15, wherein low-melting metal alloys having melting points below 300°C are used.

17. The process as claimed in claim 15, wherein alloys based on the metals Al, Zn, Cu, Bi, Pb, Sn, Fe, Sb and Si are used.

18. The process as claimed in claim 15, wherein the metals are selected from among bismuth and bismuth alloys, tin alloys and Zn/Mg/Al/Cu alloys.

## Revendications

1. Procédé de fabrication de corps creux à partir de matériaux céramiques, renforcés par des fibres selon lequel
- à la première étape des noyaux sont fabriqués dont la forme correspond à celle des espaces creux,
- à la deuxième étape un corps vert est fabriqué, dans lequel lesdits noyaux et une masse apte au pressage sont remplis et comprimés dans une forme, et où la masse apte au pressage contient des fibres de carbone et/ou des fils de carbone ainsi que du brai et/ou des matières résineuses, lesquels forment des résidus carbonés par le biais d'un traitement thermique en l'absence d'agents oxydants, de telle manière que la position des noyaux correspond à la position souhaitée des espaces creux à former,
- à la troisième étape le corps vert se solidifie par un réchauffement à une température comprise entre 120°C et 280°C sous une pression,
- à la quatrième étape le corps vert durci qui a été également désigné comme corps préalable, est carbonisé par chauffage dans une atmosphère non oxydante et à une température comprise entre 750°C environ et 1100°C environ pour devenir un corps C/C,
**caractérisé en ce que** les noyaux consistent en un matériau qui fond à l'état non décomposé à la quatrième étape à une température allant jusqu'à 100°C au dessus de la température de durcissement du corps vert, et s'écoule au moins en partie hors des espaces creux du corps vert.

2. Procédé selon la revendication 1, **caractérisé en ce que** suite à la quatrième étape
- à la cinquième étape le corps C/C est infiltré en conservant sa forme avec du métal liquide, moyennant quoi survient au moins en partie une réaction de la fraction carbonée de la matrice du corps C/C avec le métal, par formation de carbures.

3. Procédé selon la revendication 1, **caractérisé en ce que** de tels matériaux susceptibles de fondre pour les noyaux sont employés, qui sont pyrolysés sensiblement sans résidus à une température supérieure à la température de fusion.

4. Procédé selon la revendication 3, **caractérisé en ce que** le résidu de pyrolyse du matériau susceptible de fondre pour le noyau s'élève tout au plus à 10%.

5. Procédé selon l'une quelconque ou plusieurs des revendications précédentes, **caractérisé en ce que** la masse qui apte au pressage de la deuxième étape contient comme agent de renforcement des fibres de carbone avec une longueur de fibre de 5 mm au moins.

6. Procédé selon la revendication 1, **caractérisé en ce que** la masse apte au pressage de la deuxième étape est remplie dans la forme de telle manière que les fibres de carbone soient orientées principalement parallèlement à la direction de la force de traction la plus élevée de la pièce formée qui en résulte.

7. Procédé selon l'une des revendications 1 à 5, **caractérisé en ce que** la masse apte au pressage à la deuxième étape contient comme agent de renforcement des fibres de carbone sous forme de paquets de fibres courtes en couches.

8. Procédé selon l'une quelconque ou plusieurs des revendications précédentes, **caractérisé en ce que** le matériau des masses aptes au pressage contient des brais sélectionnés parmi le brai de goudron de houille ou le brai de pétrole et/ou des résines durcissables sélectionnées parmi les résines phénoliques, les résines époxydes, les polyimides, des mélanges qui contiennent des matières de charge avec de l'alcool furfuryle et des résines furaniques.

9. Procédé selon l'une quelconque ou plusieurs des revendications précédentes, **caractérisé en ce que** le matériau des noyaux présente un coefficient de dilatation thermique linéaire de 1·10⁻⁵ K⁻¹ au maximum jusqu'à sa température de décomposition.

10. Procédé selon l'une quelconque ou plusieurs des revendications précédentes 1 à 9, **caractérisé en ce que** le matériau pour le noyau est un polymère thermoplastique ayant une température de stabilité dimensionnelle à la chaleur selon la norme ISO 75A de 80°C au moins et une dureté à la bille de 30 MPa au moins.

11. Procédé selon l'une quelconque ou plusieurs des revendications précédentes, **caractérisé en ce que** le matériau pour le noyau est un polymère thermoplastique qui contient des matières de charge, dans lequel la proportion en masse de la matière de charge dans le polymère thermoplastique qui contient des matières de charge s'élève à au moins à 15%.

12. Procédé selon la revendication 11, **caractérisé en ce que** les matières de charge sont sélectionnées parmi la craie, les billes de verre, les microbilles de verre, la wollastonite, les fibres de verre, les fibres de carbone et les fibres céramiques.

13. Procédé selon l'une quelconque ou plusieurs des revendications précédentes, **caractérisé en ce qu'**un polymère thermoplastique contenant des matières de charge est utilisé comme matériau pour le noyau, dont les matières de charge contiennent des agents oxydants actifs en tant qu'accélérateur de la pyrolyse.

14. Procédé selon l'une quelconque ou plusieurs des revendications précédentes, **caractérisé en ce qu'**une résine thermoplastique expansée est utilisée comme matériau pour le noyau.

15. Procédé selon l'une quelconque ou plusieurs des revendications 1, 2 et 5 à 9, **caractérisé en ce que** des métaux à bas point de fusion sont utilisés comme matériau pour le noyau.

16. Procédé selon la revendication 15, **caractérisé en ce que** des alliages métalliques à bas point de fusion avec des points de fusion inférieurs à 300°C sont utilisés.

17. Procédé selon la revendication 15, **caractérisé en ce que** des alliages à base de métaux Al, Zn, Cu, Bi, Pb, Sn, Fe, Sb et Si sont utilisés.

18. Procédé selon la revendication 15, **caractérisé en ce que** les métaux sont sélectionnés parmi le bismuth et les alliages de bismuth, les alliages d'étain ainsi que les alliages Zn/Mg/Al/Cu.
